# EUROPÄISCHE PATENTANMELDUNG

(11) **EP 3 855 149 A1**
(43) Veröffentlichungstag der Anmeldung: **28.07.2021**
(21) Anmeldenummer: 20153466.6
(22) Anmeldetag: 23.01.2020
(51) Int. Cl.: G01L 19/00, G01L 19/06, G01L 27/00, G01M 3/32

(54) **VERFAHREN UND VORRICHTUNG ZUR ÜBERWACHUNG EINER MEMBRAN EINES DRUCKSENSORS**

(71) Anmelder: Baumer Electric AG, 8500 Frauenfeld (CH)
(72) Erfinder: Fend, Peter, 8501 Frauenfeld (CH)
(74) Vertreter: Strauss, Steffen

(57) **Zusammenfassung**

Die Erfindung betrifft ein Verfahren und eine Vorrichtung zur Überwachung einer Membran eines Drucksensors, der eine mit einem Fluid gefüllte, von der Membran zumindest abschnittsweise begrenzte Druckkammer aufweist. Lösungen aus dem Stand der Technik sind umständlich und kostenintensiv. Diese werden durch die Erfindung durch die folgenden Verfahrensschritte verbessert: Ändern des Druckes in der Druckkammer über die Zeit durch eine Einrichtung des Drucksensors; Erfassen des zeitlichen Verlaufs des Drucks in der Druckkammer; Vergleichen des Verlaufs des Drucks in der Druckkammer mit einem vorhandenen Verlauf; und Ermitteln eines Membranzustands in Abhängigkeit vom Vergleich. Die erfindungsgemäße Vorrichtung ist durch eine Einrichtung zur Änderung des Drucks in der Druckkammer, welche ausgestaltet ist den Druck in der Druckkammer zu modifizieren; und eine elektrische Auswerteeinheit, welche ausgestaltet ist, einen Verlauf des gemessenen Drucksignals mit einem vorhandenen Verlauf des Drucksignals zu vergleichen, gekennzeichnet, wobei die Vorrichtung ausgestaltet ist, ein den Zustand der Membran repräsentierendes Membranzustandssignal in Abhängigkeit vom Ergebnis des Vergleichs auszugeben.

## Beschreibung

Die Erfindung betrifft ein Verfahren und eine Vorrichtung zur Überwachung einer Membran eines Drucksensors, wobei der Drucksensor eine mit einem Fluid gefüllte, von der Membran zumindest abschnittsweise begrenzte Druckkammer aufweist und wobei in der Vorrichtung wenigstens ein Druckmessmodul in der Druckkammer angeordnet ist.

Drucksensoren aus dem Stand der Technik können einen Druck eines Mediums messen, indem dieser über eine Membran auf ein Fluid, auf die sogenannte Druckmittlerflüssigkeit, übertragen wird. Hierbei wird durch ein Druckmessmodul in einer Druckkammer, in welchem sich das Fluid befindet, der Druck des Mediums ermittelt.

Bei Beschädigung der Membran kann eine Druckmessung fehlerhaft werden, da entweder das zu messende Medium in die Druckkammer eindringen und/oder das Fluid aus der Druckkammer entweichen kann. Bei hygienischen Prozessen, wie beispielsweise in der Lebensmittel- und Pharmaindustrie, kann entweder das zu messende Medium durch das Fluid kontaminiert werden und/oder Mikroorganismen können in die Druckkammer eindringen, sich entsprechend vermehren und in späteren Produktionslosen wiederum das zu messende Medium kontaminieren. Ein Membranriss oder gar Membranbruch stellt so ein erhebliches Risiko für die Sicherheit des zu messenden Mediums dar, beispielsweise der Lebensmittelsicherheit.

Im Stand der Technik wird eine Überwachung eines Bruches der Membran beispielsweise durch ein zweites Druckmesssystem, das heißt mittels einer Doppelmembran ermöglicht. Ferner können auch weitere Sensorelemente, beispielsweise auf der Membran aufgebrachte Drähte vorgesehen sein, um einen Bruch zu detektieren. Weitere bekannte Verfahren messen beispielsweise die Leitfähigkeit oder die Dielektrizität des Fluides, um eine Kontamination durch ein eindringendes Medium zu detektieren. Diese Lösungen aus dem Stand der Technik sind allesamt aufwendig und kostenintensiv bzw. erlauben es nicht Mikrorisse zu detektieren, da beispielsweise eine Kontamination durch das eindringende Medium erst sehr spät detektiert werden kann, weil ein Mikroriss praktisch kaum einen Flüssigkeitsaustausch ermöglicht.

Aufgabe der vorliegenden Erfindung ist es somit, eine einfache und kostengünstig zu implementierende Möglichkeit bereitzustellen, den Zustand und insbesondere einen Defekt, wie beispielsweise einer Undichtigkeit der Membran eines Drucksensors, sicher zu erkennen.

Diese Aufgabe wird durch die Erfindung für das eingangs genannte Verfahren durch die folgenden Verfahrensschritte gelöst: Ändern des Druckes in der Druckkammer über die Zeit durch eine Einrichtung des Drucksensors; Erfassen des zeitlichen Verlaufs des Drucks in der Druckkammer; Vergleichen des Verlaufs des Drucks in der Druckkammer mit einem vorhandenen Verlauf; und Ermitteln eines Membranzustands in Abhängigkeit vom Vergleich.

Für die eingangs genannte Vorrichtung löst die vorliegende Erfindung diese Aufgabe dadurch, dass die Vorrichtung ferner eine Einrichtung zur Änderung des Drucks in der Druckkammer und eine elektrische Auswerteeinheit umfasst, wobei die Einrichtung zur Änderung des Drucks ausgestaltet ist den Druck in der Druckkammer zu variieren, wobei die elektrische Auswerteeinheit ausgestaltet ist, einen Verlauf des gemessenen Drucksignals mit einem vorhandenen Verlauf des Drucksignals zu vergleichen, und wobei die Vorrichtung ausgestaltet ist, ein den Zustand der Membran repräsentierendes Membranzustandssignal in Abhängigkeit vom Ergebnis des Vergleichs auszugeben.

Das Verfahren und die Vorrichtung haben den Vorteil, dass ein per se zur Messung eines Druckes ausgelegter Drucksensor eine bewusst auf das Fluid beaufschlagte Druckänderung detektiert und den Verlauf des gemessenen Druckes mit einem vorhandenen Verlauf des Drucksignals bei intakter Membran vergleicht. Sofern der ermittelte Verlauf des Drucksignals nicht dem erwarteten Verlauf entspricht, bzw. wenn dieser um einen vorab festgelegten Wert vom erwarteten Verlauf abweicht, kann hieraus auf einen Defekt der Membran geschlossen werden. Diese Lösung ist einfach und kostengünstig und erlaubt auch ein Erkennen von Mikrorissen. Die erfindungsgemäße Lösung erfordert nicht zwingend eine zusätzliche Öffnung zur Druckkammer und folglich auch keine kritische, fehleranfällige und mit Kosten verbundene Abdichtung.

Erfindungsgemäß kann somit eine Aussage über den Zustand der Membran des Drucksensors erhalten werden. Sofern der Verlauf des gemessenen Drucksignals vom vorhandenen, zu erwartenden Verlauf des Drucksignals abweicht, kann angenommen werden, dass der Drucksensor schadhaft geworden ist, insbesondere ein Membranriss oder Membranbruch vorliegt. Die bewusst herbeigeführte Änderung des Druckes in der Druckkammer kann dann nicht mehr aufgebaut werden, da der Gegendruck der Membrane teilweise oder ganz fehlt.

Die erfindungsgemäße Lösung kann durch verschiedene, jeweils für sich vorteilhafte und beliebig miteinander kombinierbare Ausgestaltungen weiter verbessert werden. Auf diese Ausgestaltungen und die mit ihnen verbundenen Vorteile wird im Folgenden eingegangen.

Hierbei sind Merkmale, die im Rahmen des Verfahrens beschrieben werden auch auf eine entsprechende Ausgestaltung der Vorrichtung übertragbar. Ebenso können Vorrichtungsmerkmale auf eine entsprechende Ausgestaltung des Verfahrens übertragen werden.

Der zeitliche Verlauf des ermittelten Drucks kann sich insbesondere aus dem zu messenden Mediumsdruck und der hinzugefügten Druckänderung zusammensetzen. Ferner kann die Membran des Drucksensors durch das Fluid vorgespannt sein, was durch einen den Mediumsdruck übersteigenden Vordruck in der Druckkammer gebildet ist.

Das Fluid ist bevorzugt inkompressibel und kann beispielsweise ein in der Druckkammer aufgenommenes Öl sein. Allgemein handelt es sich bei dem Fluid um einen Stoff mit einem geringen Gasdruck, der bevorzugt keine anderen Stoffe löst und weiter bevorzugt nicht elektrisch leitend ist. Über die Membran kann ein zu messender Mediumsdruck in die Druckkammer übertragen werden, d. h. die Membran ist bevorzugt reversibel flexibel auslenkbar. Die Druckkammer kann durch ein Gehäuse des Drucksensors und die Membran begrenzt sein. Ferner kann auch ein Druckmessmodul die Druckkammer zumindest abschnittsweise begrenzen. Das Fluid ist bevorzugt in der Druckkammer eingekapselt.

Im erfindungsgemäßen Verfahren und der erfindungsgemäßen Vorrichtung erfolgt die Änderung des Drucks in der Druckkammer bevorzugt gesteuert und/oder geregelt. Das heißt, dass der Druck im zeitlichen Verlauf und/oder in einer vorbestimmten Größe vorab festgelegt sein kann. Die geregelte Änderung des Drucks in der Druckkammer kann von einer Einrichtung des Drucksensors geregelt werden und bevorzugt reversibel und reproduzierbar erfolgen.

Der Verfahrensschritt des vorbestimmten Änderns des Drucks in der Druckkammer kann das Variieren der Temperatur des Fluid und/oder das Verändern eines Volumens der Druckkammer umfassen. Sowohl die Variation der Temperatur, als auch die Veränderung des Volumens erfolgen bevorzugt vorbestimmt, zum Beispiel in einem vorab festgelegten Zeitraum und/oder in einem vorab festgelegtem zeitlichen Verlauf und/oder mit vorab festgelegter Größe der Änderung.

So kann das Variieren der Temperatur mit einem vorbestimmten Temperaturverlauf erfolgen oder ein solcher durch einen vorbestimmten Verlauf einer Heizleistung erzeugt werden. Letztere wird bevorzugt mit einem Temperatursensor überwacht und/oder geregelt. Ebenso kann der Verlauf der Volumenänderung vorbestimmt sein.

In einer entsprechenden Ausgestaltung der erfindungsgemäßen Vorrichtung kann die Einrichtung zur Änderung des Drucks in der Druckkammer eine Temperiereinrichtung aufweisen, die ausgestaltet ist, die Temperatur des Fluids (bevorzugt geregelt) zu verändern.

Die Temperiereinrichtung kann ein Heiz- und/oder Kühlelement umfassen, und kann ausgestaltet sein, das Fluid zu erwärmen und/oder abzukühlen.

Die Temperiereinrichtung kann in einem Gehäuse der Vorrichtung oder zumindest abschnittsweise von dem Fluid umgeben in der Druckkammer angeordnet sein. Die Anordnung im Gehäuse der Vorrichtung hat den Vorteil, dass keine Modifikation der Druckkammer an sich notwendig ist, kann jedoch die Wärmeübertragung vom Gehäuse zum Fluid etwas verzögern. Diese Möglichkeit der Anordnung der Temperiereinrichtung ist nicht invasiv, wobei die Temperiereinrichtung beispielsweise als Heizelement um einen Druckkanal herum und/oder an einer der Membran gegenüberliegenden Wandung angeordnet sein kann. Eine raschere Erwärmung oder Abkühlung des Fluids wird ermöglicht, wenn sich die Temperiereinrichtung vom Fluid umgeben in der Druckkammer befindet.

In der Ausgestaltung der Vorrichtung/des Verfahrens mit Temperiereinrichtung wird aufgrund des Erwärmens bzw. des Abkühlens des Fluids eine thermische Ausdehnung bzw. ein thermisches Zusammenziehen des Fluids erreicht und eine Druckänderung erwirkt.

Erfolgt eine Änderung des Drucks in der Druckkammer über das Verändern des Volumens der Druckkammer, so umfasst in der entsprechenden Ausgestaltung der erfindungsgemäßen Vorrichtung die Einrichtung zur Änderung des Drucks in der Druckkammer eine Volumenänderungseinrichtung, die ausgestaltet ist, das Volumen der Druckkammer zu modifizieren.

Die Volumenänderungseinrichtung kann einen Verdrängerkörper umfassen, der ausgestaltet ist, dass Fluid aus einem Bereich der Druckkammer zu verdrängen. Insbesondere kann der Bereich der Druckkammer im aktivierten Zustand des Verdrängerkörpers von diesem eingenommen werden. Der Verdrängerkörper kann ein Piezoelement oder Aktuator sein bzw. von einem Piezoelement oder einem Aktuator betätigt werden.

Der Verdrängerkörper kann in die Druckkammer hinein und/oder aus dieser heraus beweglich sein, wodurch das (bevorzugt inkompressible) Fluid verdrängt wird und eine Kraft bzw. einen Druck auf die Membran ausübt. Die Membran (diese kann federnd ausgelenkt werden) kann ihrerseits eine Kraft auf das Fluid ausüben, welche sich in einer Druckänderung widerspiegelt. Der Aktuator kann an einer beliebigen Stelle in der Druckkammer angeordnet sein. Die Wirkungsweise der Membran hinsichtlich des Drucks in der Druckkammer ist für die Lösung mit Temperiereinrichtung identisch.

In einer Ausgestaltung der erfindungsgemäßen Vorrichtung kann die Einrichtung zur Änderung des Drucks in der Druckkammer ausgestaltet sein, eine Druckänderung in der Druckkammer zu erzeugen, die periodisch; oder in Form eines Einzelimpulses; oder eine Kombination aus periodischer Änderung und Änderung mittels mindestens eines Einzelimpulses ist.

Eine sprunghafte geregelte Änderung des Druckes in der Druckkammer, d. h. in Form eines oder mehrerer Einzelimpulse kann vorteilhaft sein, um eine fehlende Membran oder Risse der Membran mit deutlichem Durchbruch schnell zu detektieren. Unter sprunghaft ist zu verstehen, dass sich der Druck mit einer steilen ansteigenden oder abfallenden Flanke ändert. Diese Änderung ist deutlich schneller als Änderungen des zu messenden Mediumsdruckes
Zur Detektion eines Haarrisses dagegen kann es vorteilhaft sein, eine sich aufbauende bzw. abbauende Druckänderung im Fluid zu erzeugen, die sich über einen Zeitraum verändert, der ein Vielfaches der Abtastzeit des Drucks beträgt. Beispielsweise kann sich die Druckänderung - nicht einschränkend - über eine bis mehrere Minuten bis hin zu einer bis mehreren Stunden auf- bzw. abbauen. Besonders bevorzugt werden Änderungen des Druckes in der Druckkammer mit unterschiedlichen Zeitkonstanten kombiniert. Diese Änderungen können zudem periodisch erfolgen.

In einer weiteren Ausgestaltung des erfindungsgemäßen Verfahrens kann der Verfahrensschritt des Vergleichens das Ermitteln einer Sprungantwort des Drucks auf die Änderung des Drucks in der Druckkammer; und das Vergleichen der ermittelten Sprungantwort mit einer bereits vorhandenen Sprungantwort umfassen.

Die vorhandene Sprungantwort kann durch Kalibrierung und/oder Berechnung erhalten worden sein. Diese kann ferner in der Vorrichtung bereitgestellt, beispielsweise gespeichert sein, wobei eine entsprechende Ausgestaltung der Vorrichtung ein Speichermodul aufweisen kann.

Da sich das Fluid des Drucksensors bereits in Abhängigkeit von der (mitunter nicht gezielt gesteuerten) Umgebungstemperatur ausdehnt bzw. zusammenzieht, ist es vorteilhaft, dessen Temperatur zu messen und eine durch eine Temperaturänderung des kompletten Sensors erfolgte Druckänderung zu berücksichtigen. Hierzu kann beispielsweise eine Lookup-Tabelle verwendet werden oder eine zu erwartende Änderung des Drucks in der Druckkammer aufgrund der Erwärmung oder Abkühlung des Fluids berechnet werden.

Die Korrektur des Einflusses der Umgebungstemperatur auf den zeitlichen Verlauf des Drucks kann auch vorteilhaft sein, wenn das vorbestimmte Ändern des Drucks in der Druckkammer mittels Veränderung des Volumens der Druckkammer geschieht.

Ist ein solcher Einfluss herausgerechnet, so kann die gemessene Sprungantwort des Drucks in der Druckkammer mit einer vorhandenen Sprungantwort des Drucks in der Druckkammer verglichen werden.

Bei periodischer Änderung des Drucks in der Druckkammer kann eine Kreuzkorrelation des ermittelten Verlaufs des Drucks mit einem vorhandenen Verlauf der Druckänderung in der Druckkammer durchgeführt werden.

In einer entsprechenden Ausgestaltung der Vorrichtung kann somit ein Korrelationsmodul bereitgestellt sein. Sofern der ermittelte Verlauf des Drucks mit dem vorhandenen Verlauf korreliert, kann davon ausgegangen werden, dass die Membran intakt ist.

Ferner kann ein Korrelationskoeffizient der Korrelation bestimmt werden. Unterschreitet dieser einen bestimmten, vorab festgelegten Schwellwert, so kann von einem Defekt der Membran ausgegangen werden. Die Korrelation kann über einen großen Zeitbereich, beispielsweise von Minuten bis Stunden, erfolgen, was eine präzise Aussage zum Membranzustand ermöglicht.

In einer weiteren Ausgestaltung des erfindungsgemäßen Verfahrens umfasst dieses ferner das vorbestimmte Ändern des Druckes in der Druckkammer während einer laufenden Messung und das Ermitteln eines auf die Membran von außerhalb der Druckkammer einwirkenden Mediumsdruckes durch Berücksichtigung der vorbestimmten Druckänderung. Mit anderen Worten kann erfindungsgemäß eine Auswertung des Membranzustands während einer laufenden Messung eines Mediumsdruckes stattfinden, ohne jedoch den ermittelten Mediumsdruck durch die Änderung des Drucks in der Druckkammer zu verfälschen.

Die Ermittlung des Membranzustandes sollte durch einen nicht vorbestimmten, zufälligen Verlauf des Mediumsdruckes nicht verfälscht werden. Der Mediumsdruck und dessen Verlauf stellt für die Auswertung des Membranzustands eine Störgröße dar.

Die Vorrichtung bzw. das Verfahren kann hierfür einen entsprechenden Filter aufweisen, der bevorzugt die Frequenzen der Druckänderung (d. h. des Drucksignals), mit denen sich der Mediumsdruck erwartungsgemäß ändert, von jenen Frequenzen zu trennen, mit denen der Druck in der Druckkammer geregelt geändert wird.

Eine weitere Möglichkeit die Messung des Mediumsdruckes von der Ermittlung des Membranzustandes zu entkoppeln ergibt sich bei einer raschen Änderung des Druckes in der Druckkammer über die Zeit mittels eines Einzelimpulses dann, wenn sich ein eingeschwungener Zustand (der Druckänderung) sehr schnell einstellt, beispielsweise innerhalb von einer Millisekunde. In einem solchen Fall ist es möglich die Signalausgabe des Mediumsdruckes während der Ermittlung des Membranzustandes zu pausieren und nach erfolgter Ermittlung des Membranzustandes fortzuführen. Hierdurch wird die Messung des Mediumsdruckes nicht verfälscht.

Allerdings wird eine Reaktionsgeschwindigkeit auf die Änderung des Drucks maßgeblich von der Größe des Risses der Membran bestimmt. Fehlt die Membran komplett, so wird der Druck in der Druckkammer durch die geregelte Änderung des Druckes sehr schnell abfallen, wohingegen dies bei einem Haarriss sehr lange dauern kann.

Erfindungsgemäß kann im Verfahren bzw. in der Vorrichtung der Vergleich der Sprungantworten und die zuvor beschriebene Kreuzkorrelation des gemessenen Druckverlaufs mit einem vorhandenen Druckverlauf kombiniert werden, um sowohl größere Risse, als auch Haarrisse in der Membran zu detektieren.

Ebenso ist es möglich, die Sprungantwort des Druckverlaufs an Flanken einer möglicherweise periodischen, vorbestimmten Druckänderung auszuwerten. Dies hat den Vorteil, dass eine Auswertung des Membranzustandes mit kurzer (Sprungantwort an der Flanke) und zeitgleich langer (Korrelation mit der periodischen Druckänderung) Zeitkonstante möglich ist. Hierbei kann zusätzlich die Flanke der periodischen Druckänderung mit einer Signalspitze versehen sein, um den Effekt für die Sprungantwort des ermittelten Drucks in der Druckkammer zu vergrößern, wobei zeitgleich eine störende Wirkung auf die langsamere periodische Änderung des Drucks und die Korrelation dieses Signals gering bleibt.

Im Folgenden ist die Erfindung beispielhaft anhand vorteilhafter Ausführungsformen mit Bezug auf die Zeichnungen näher erläutert. Die bei den Ausführungsformen beispielhaft dargestellten Merkmalskombinationen können nach Maßgabe der vorstehenden Ausführungen durch weitere Merkmale ergänzt werden. Auch können, ebenfalls nach Maßgabe der obigen Ausführungen, einzelne Merkmale bei den beschriebenen Ausführungsformen weggelassen werden, wenn es auf die Wirkung dieses Merkmals in einem konkreten Anwendungsfall nicht ankommt. In den Zeichnungen werden für Elemente gleicher Funktion und / oder gleichen Aufbaus dieselben Bezugszeichen verwendet.

Es zeigen:
- Fig. 1: eine schematische Schnittansicht eines Drucksensors mit einer Ausgestaltung einer Vorrichtung zur Überwachung einer Membran des Drucksensors;
- Fig. 2: eine schematische Schnittansicht des Drucksensors mit einer weiteren Ausgestaltung der Vorrichtung zur Überwachung der Membran des Drucksensors;
- Fig. 3: eine schematische Schnittansicht des Drucksensors mit einer weiteren Ausgestaltung der Vorrichtung zur Überwachung der Membran des Drucksensors;
- Fig. 4: schematisch einen realistischen Verlauf eines Mediumsdruckes sowie den Einfluss einer periodisch hinzugefügten Druckänderung auf den zeitlichen Verlauf des Drucks;
- Fig. 5: schematisch mögliche zeitliche Verläufe des Drucks in der Druckkammer in Reaktion auf eine vorbestimmte sprunghafte Druckänderung in der Druckkammer; und
- Fig. 6: schematisch einen möglichen Verlauf einer vorbestimmten Änderung des Druckes in der Druckkammer über die Zeit.

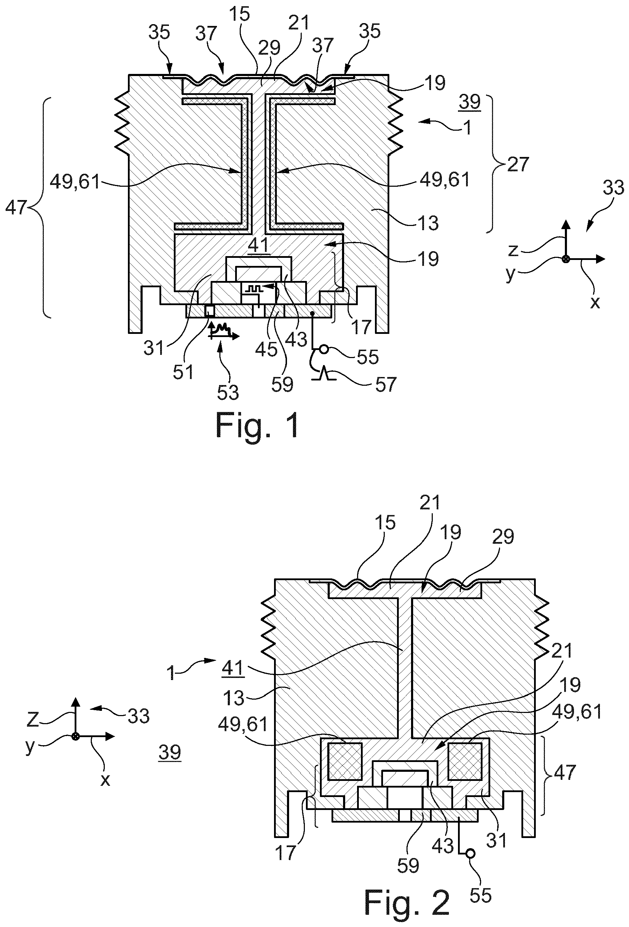

Im Folgenden zeigen die Fig. 1 bis Fig. 3 schematische Schnittdarstellungen von Drucksensoren 1 mit unterschiedlichen Ausgestaltungen der erfindungsgemäßen Vorrichtung 47 zur Überwachung einer Membran 15 eines Drucksensors 1.

Die Drucksensoren 1 umfassen jeweils ein Gehäuse 13, welches zusammen mit einer Membran 15 und einer Elektronikanordnung 17 eine Druckkammer 19 begrenzen. Die Druckkammer 19 ist mit einem Fluid 21 gefüllt, welches insbesondere ein nichtkompressibles Fluid, wie beispielsweise ein Öl ist.

Die Druckkammer 19 kann insbesondere rotationssymmetrisch ausgestaltet sein, sodass die Druckkammer 19 der gezeigten Drucksensoren 1 eine Hantelform aufweisen kann.

Um thermische Einflüsse einer Umgebungstemperatur möglichst gering zu halten (d. h. die thermische Ausdehnung des Fluids 21 in Abhängigkeit von der Umgebungstemperatur), weist die Druckkammer 19 einen Verengungsbereich 27 auf, der ein erstes Reservoir 29 und ein zweites Reservoir 31 mittels des Fluids 21 verbindet. Dies verringert die Menge des Fluids 21 im Drucksensor 1 und somit den Einfluss der thermischen Ausdehnung.

Die Membran 15 ist entlang der im kartesischen Koordinatensystem 33 definierten z-Richtung bzw. entgegen der z-Richtung auslenkbar, da die Membran 15 lediglich an den Randbereichen 35 mit dem Gehäuse 13 verbunden ist. Eine Auslenkung wird dadurch begünstigt, dass die Membran 15 wellenförmig Dehnungsbereich 37 aufweist.

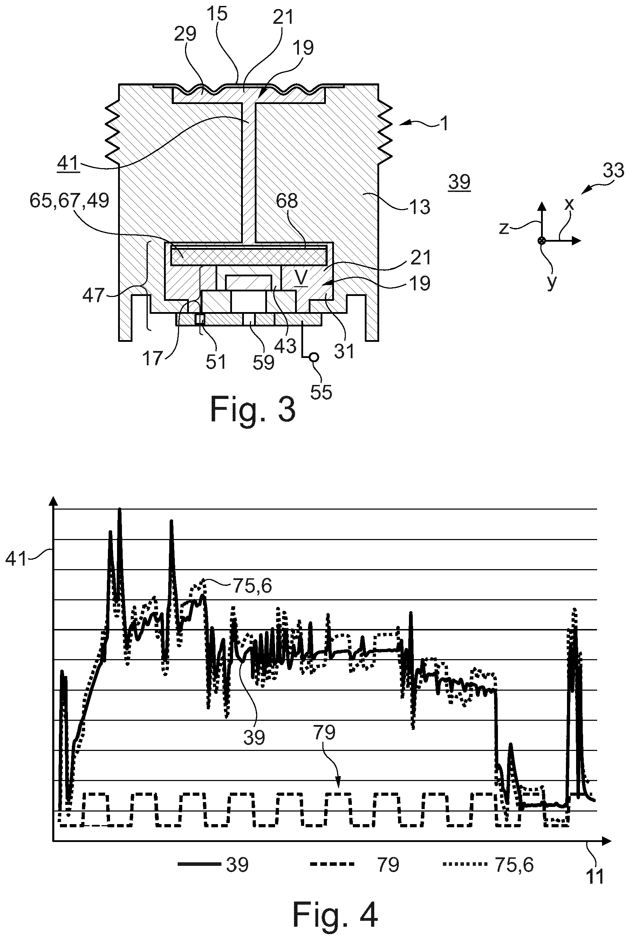

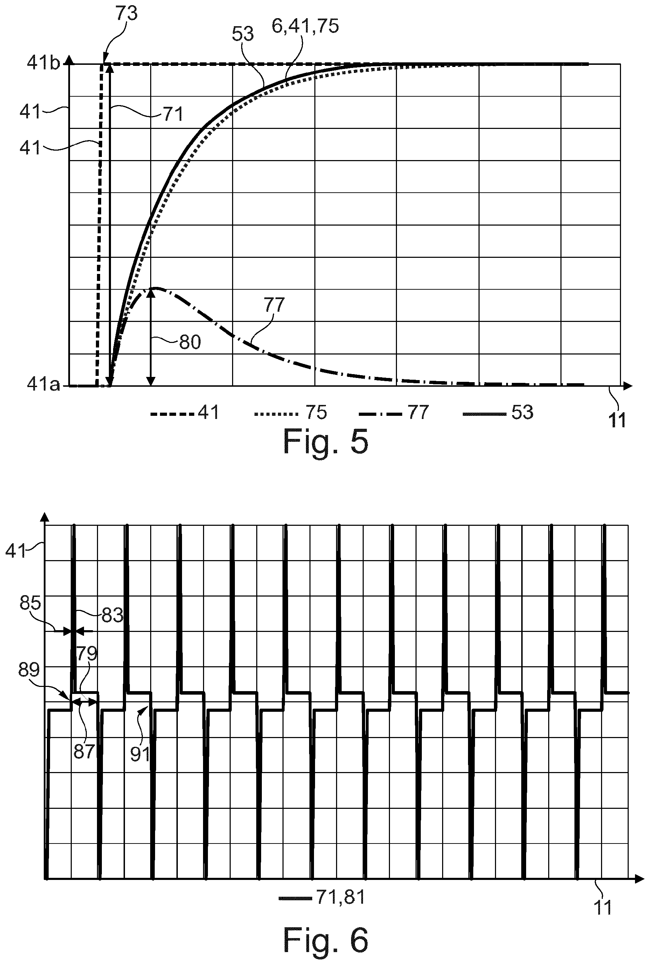

Ein außerhalb des Drucksensors vorhandener Mediumsdruck 39 wird über die Membran 15 auf das Fluid 21 übertragen, welche wiederum diesen übertragenen, in der Druckkammer 19 vorherrschenden Druck 41 auf ein Druckmessmodul 43 der Elektronikanordnung 17 überträgt. Das Druckmessmodul 43 erzeugt ein Drucksignal 45, welches lediglich rein beispielhaft in Fig. 1 angedeutet ist. Das Drucksignal 45 wird in Abhängigkeit von der Zeit 11 ermittelt (dargestellt in den Figuren 4 und 5).

Ferner weisen die gezeigten Drucksensoren 1 eine Vorrichtung 47 zur Überwachung der Membran 15 des Drucksensors 1 auf. Diese Vorrichtung 47 umfasst zum Teil Elemente der Drucksensoren 1 aus dem Stand der Technik (wie zum Beispiel die Druckkammer 19), als auch zusätzliche Elemente nach Maßgabe der vorliegenden Erfindung.

So umfasst die Vorrichtung in allen drei gezeigten Ausgestaltungen eine Einrichtung 49 zur Änderung des Drucks 41 in der Druckkammer 19 und eine elektrische Auswerteeinheit 51, welche den (nicht gezeigten) Verlauf des Drucksignals 45 mit einem vorhandenen Verlauf 53 des Drucksignals 45 vergleicht. Der vorhandene Verlauf 53 ist rein beispielhaft und schematisch dargestellt. Dieser kann beispielsweise in der Auswerteeinheit 51 gespeichert sein. Der vorhandene Verlauf 53 kann auch als vorhandene Sprungantwort 53 bezeichnet werden

Die Vorrichtung 47 ist ferner ausgestaltet an einem Ausgang 55 ein Membranzustandssignal 57 auszugeben. Dieses wird in Abhängigkeit vom Ergebnis des Vergleichs, beispielsweise in einem schematisch dargestellten Vergleichsmodul 59 ermittelt und ist rein beispielhaft als Dreieckspuls dargestellt. Das Membranzustandssignal 57 kann jedoch beispielsweise bevorzugt in Form eines Binärwertes (0 oder 1) ausgegeben werden. Dieses Membranzustandssignal 57 repräsentiert den Zustand der Membran 15, das heißt ob diese intakt ist oder einen Riss (nicht gezeigt) aufweist.

In den in Fig. 1 und Fig. 2 gezeigten Ausgestaltungen der Vorrichtung 47 ist die Einrichtung 49 zur Änderung des Drucks 41 in der Druckkammer 19 eine Temperiereinrichtung 61, welche ausgestaltet ist, die Temperatur des Fluids 21 (geregelt) zu verändern.

In der in Fig. 1 gezeigten Ausgestaltung befindet sich die Temperiereinrichtung 61 im Gehäuse 13 des Drucksensors 1, wohingegen sich die Temperiereinrichtung 61 in der in Fig. 2 gezeigten Ausgestaltung unmittelbar im Fluid 21 befindet. Mittels der Temperiereinrichtung 61 ist es möglich, den Druck 41 in der Druckkammer 19 in einer vorbestimmten Weise zu verändern, wobei darauffolgend durch das Druckmessmodul 43 der (nicht gezeigte) Verlauf des Druckes 41 ermittelt und durch das Vergleichsmodul 59 mit dem vorhandenen Verlauf 53 verglichen werden kann, wobei das Ergebnis des Vergleichs das Membranzustandssignal 57 liefert.

In Fig. 3 ist die Einrichtung 49 eine Volumenänderungseinrichtung 65, welche ausgestaltet ist, ein Volumen der Druckkammer 19 zu modifizieren. Die Volumenänderungseinrichtung 65 kann einen Verdrängerkörper 67 umfassen, der ausgestaltet ist das Fluid 21 aus einem Bereich 68 der Druckkammer 19 zu verdrängen. Die Volumenänderungseinrichtung 65 kann ferner eine Treibersteuerung bzw. eine Steuerelektronik umfassen, welche der Übersichtlichkeit halber nicht eingezeichnet sind. Diese können bevorzugt Teil der Elektronikanordnung 17 sein. Der Verdrängerkörper 67 kann beispielsweise durch ein Piezoelement oder einen Aktuator ausgebildet sein.

Der Bereich 68 ist als mit einer dicken Linie gezeichneter Bereich über dem Verdrängerkörper 67 schematisch dargestellt. In diesen Bereich 68 dehnt sich der Verdrängerkörper 67 in einem aktivierten Zustand hinein aus und verdrängt aus diesem Bereich folglich das Fluid 21. Da dieses gegen eine Federwirkung der Membran 15 erfolgt erhöht sich der Druck 41 in der Druckkammer 19 durch die Aktivierung des Verdrängerkörpers 67.

In der Fig. 4 ist der Mediumsdruck 39 mit einer durchgezogenen Linie dargestellt. Der Verlauf dieses Mediumsdruckes 39 kann einer realen Messung entsprechen, ist jedoch dennoch rein beispielhaft zur Verdeutlichung gezeigt. Ferner wird durch die Einrichtung 49 eine periodische Änderung des Drucks 41 in Form eines Rechtecksignals 79 auf das Fluid 21 übertragen. Nunmehr entspricht der zeitlich gemessene Verlauf 6 einer Überlagerung des Mediumsdruckes 39 mit der periodischen Änderung des Rechtecksignals 79.

Gemäß der vorliegenden Erfindung werden in einer Ausgestaltung des Verfahrens das Rechtecksignal 79 und der zeitlich gemessene Verlauf 6 miteinander korreliert. Dies kann in einem (nicht gezeigten) Korrelationsmodul der Vorrichtung 1 erfolgen. Hierbei kann ein Korrelationskoeffizient ermittelt werden, welcher als Maß für den statistischen Zusammenhang zwischen dem Rechtecksignal 79 und dem zeitlich gemessenen Verlauf 6 verstanden werden kann. Der somit ermittelte Korrelationskoeffizient kann mit einem bereitgestellten Schwellenwert verglichen werden, wobei bei Unterschreiten des Schwellenwertes ein verringerter statistischer Zusammenhang zwischen der eingeführten Änderung 79 des Druckes 41 und dem zeitlich gemessenen Verlauf 6 besteht. Ein verringerter statistischer Zusammenhang kann auf einen Defekt der Membran 15 hindeuten.

Ferner können die erfindungsgemäße Vorrichtung bzw. das erfindungsgemäße Verfahren ausgestaltet sein, den zeitlich gemessenen Verlauf 6 des Drucks 41 im Hinblick auf die Änderung 79 des Druckes 41 zu korrigieren und den korrekten Mediumsdruck39 zu ermitteln und/oder an einem Ausgang in Form eines Drucksignals 45 bereitzustellen.

In Fig. 5 wird eine Änderung des Drucks 41 in der Druckkammer 19 in Form einer Stufe 73 durch die Vorrichtung 47 gezeigt. Sofern die Membran 15 nicht flexibel wäre, würde diese Stufe 73 auch dem zeitlichen gemessenen Verlauf 6 des Drucks 41 entsprechen. Dieser Verlauf 6 des Drucks 41 liegt jedoch in Form einer Sprungantwort 75 vor, deren exakte Gestalt im Wesentlichen von der Art des Fluids 21, der Größe und Flexibilität der Membran 15 bzw. dem Volumen der Druckkammer 19 abhängt.

Ferner ist der erwartete Verlauf 53 des Drucks 41 mit einer durchgezogenen Linie dargestellt. Dieser erwartete Verlauf 53 entspricht dem vorstehend erwähnten vorhandenen Verlauf 53, der entweder durch eine Kalibrierung oder durch eine Berechnung erhalten werden kann. Mit diesem vorhandenen Verlauf 53 wird die Sprungantwort 75 verglichen. Zur Unterscheidung ist der vorhandene Verlauf 53 versetzt zur Sprungantwort 75 eingezeichnet. Beide sind jedoch nahezu identisch, sodass die elektrische Auswerteeinheit 51 Übereinstimmung detektiert und von der Vorrichtung 47 das Membranzustandssignal 57 ausgegeben wird, welches den Zustand der Membran 15, in diesem Fall: intakt, repräsentiert.

In der Fig. 5 ist ebenso eine zweite Sprungantwort 77 eingezeichnet, welche rein beispielhaft den Fall darstellt, dass ein Riss oder Bruch in der Membran 15 vorhanden ist. In diesem Fall entspricht die zweite Sprungantwort 77 nicht dem für eine intakte Membran 15 erwarteten vorhandenen Verlauf 53, insbesondere wird in diesem Fall der Druck 41 auch nach dem Einschwingen des Systems nicht von einem Startdruck 41a auf einen Enddruck 41 b erhöht, sondern fällt nach einem Anstieg 80, der geringer ist als die Änderung 79, auf den Startdruck 41a zurück. Ein Vergleich der zweiten Sprungantwort 77 mit dem vorhandenen Verlauf 53 liefert somit das Ergebnis, dass diese unterschiedlich sind. Nunmehr wird von der Vorrichtung 47 das Membranzustandssignal 57 ausgegeben, welches den Zustand der Membran 15 (in diesem Fall: defekt) repräsentiert.

Die Darstellung des Druckes 41 ist rein beispielhaft dargestellt und der in Fig. 5 gezeigte Fall geht davon aus, dass der Mediumsdruck 39 konstant ist.

In der Fig. 6 ist ein beispielhaftes Kompositsignal 81 der Änderung des Druckes 41 gezeigt. Dieses setzt sich aus dem Rechtecksignal 79 und einem Impulssignal 83 zusammen. Das Impulssignal 83 hat eine Impulsbreite 85, die deutlich kürzer ist als die halbe Periodendauer 87 des Rechtecksignals 79. Das Impulssignal 83 nimmt an einer ansteigenden Flanke 89 des Rechtecksignals 79 positive Werte an, wohingegen es an einer abfallenden Flanke 91 des Rechtecksignals 79 negative Werte annimmt.

Ein derartiges Kompositsignal 81 kann zum einen eine Sprungantwort 75 des Drucks 41 aufgrund des Impulssignals 83 auswerten und zudem eine Korrelation des Kompositsignals 81 mit dem zeitlich gemessenen Verlauf 6 des Druckes 41 in der Druckkammer 19 durchführen. Mit der ersten Auswertung können bevorzugt größere Risse detektiert werden, wohingegen das zeitaufwändigere Verfahren der Korrelation zur Detektion von Mikrorissen geeignet ist.

In einer Ausgestaltung des erfindungsgemäßen Verfahrens kann eine Ausgabe des Mediumsdruckes 39 während der Dauer des Impulssignals 83 pausiert werden, sodass das auszugebende, den Mediumsdruck 39 repräsentierende Signal lediglich hinsichtlich des Anteils des Rechtecksignals 79 korrigiert werden muss.

## Patentansprüche

1. Verfahren zur Überwachung einer Membran (15) eines Drucksensors (1), der eine mit einem Fluid (21) gefüllte, von der Membran (15) zumindest abschnittsweise begrenzte Druckkammer (19) aufweist, umfassend folgende Verfahrensschritte:
- Ändern des Druckes (41) in der Druckkammer (19) über die Zeit (11) durch eine Einrichtung (49) des Drucksensors (1);
- Erfassen des zeitlichen Verlaufs (6) des Drucks (41) in der Druckkammer (19);
- Vergleichen des Verlaufs (6) des Drucks (41) in der Druckkammer (19) mit einem vorhandenen Verlauf (53); und
- Ermitteln eines Zustands der Membran (15) in Abhängigkeit vom Vergleich.

2. Verfahren nach Anspruch 1, wobei der Verfahrensschritt des vorbestimmten Änderns des Drucks (41) in der Druckkammer (19) umfasst:
- Variieren der Temperatur des Fluids (21); und/oder
- Verändern eines Volumens der Druckkammer (19).

3. Verfahren nach Anspruch 1 oder 2, wobei der Verfahrensschritt des Vergleichens umfasst:
- Ermitteln einer Sprungantwort (75, 77) des Drucks (41) auf die Änderung des Drucks (41) in der Druckkammer (19); und
- Vergleichen der ermittelten Sprungantwort (75, 77) mit einer bereits vorhandenen Sprungantwort (53).

4. Verfahren nach einem der Ansprüche 1 bis 3, ferner umfassend:
- vorbestimmtes Ändern des Druckes (41) in der Druckkammer (19) während einer laufenden Messung; und
- Ermitteln eines auf die Membran (15) von außerhalb der Druckkammer (19) einwirkenden Mediumsdruckes (39) durch Berücksichtigung der vorbestimmten Änderung des Drucks (41).

5. Vorrichtung (47) zur Überwachung einer Membran (15) eines Drucksensors (1), umfassend eine mit einem Fluid (21) gefüllte Druckkammer (19), die abschnittsweise durch die Membran (15) begrenzt ist, wobei wenigstens ein Druckmessmodul (43) in der Druckkammer (19) angeordnet ist;
**dadurch gekennzeichnet, dass**
die Vorrichtung (47) ferner umfasst:
- eine Einrichtung (49) zur Änderung des Drucks (41) in der Druckkammer (19), welche ausgestaltet ist, den Druck (41) in der Druckkammer (19) zu variieren; und
- eine elektrische Auswerteeinheit (51), welche ausgestaltet ist, einen Verlauf (6) des gemessenen Drucksignals (45) mit einem vorhandenen Verlauf (53) des Drucksignals (85) zu vergleichen,
wobei die Vorrichtung (47) ausgestaltet ist, ein den Zustand der Membran repräsentierendes Membranzustandssignal (57) in Abhängigkeit vom Ergebnis des Vergleichs auszugeben.

6. Vorrichtung (47) nach Anspruch 5, wobei die Einrichtung (49) zur Änderung des Drucks (41) in der Druckkammer (19) eine Temperiereinrichtung (61) aufweist, die ausgestaltet ist, die Temperatur des Fluids (21) zu verändern

7. Vorrichtung (47) nach Anspruch 6, wobei die Temperiereinrichtung (61) in einem Gehäuse (13) der Vorrichtung (47) oder, zumindest abschnittsweise von dem Fluid (21) umgeben in der Druckkammer (19) angeordnet ist.

8. Vorrichtung (47) nach Anspruch 5, wobei die Einrichtung (49) zur Änderung des Drucks (41) in der Druckkammer (19) eine Volumenänderungseinrichtung (65) umfasst, die ausgestaltet ist, das Volumen der Druckkammer (19) zu modifizieren.

9. Vorrichtung (47) nach Anspruch 8, wobei die Volumenänderungseinrichtung (65) einen Verdrängerkörper (67) umfasst, der ausgestaltet ist, das Fluid (21) aus einem Bereich (68) der Druckkammer (19) zu verdrängen.

10. Vorrichtung (47) nach einem der Ansprüche 5 bis 9, wobei die Einrichtung (49) zur Änderung des Drucks (41) in der Druckkammer (19) ausgestaltet ist, eine Druckänderung (71) in der Druckkammer (19) zu erzeugen, die
- periodisch; oder
- in Form eines Einzelimpulses (83); oder
eine Kombination aus periodischer Änderung und Änderung mittels mindestens eines Einzelimpulses (83) ist.
